# EUROPÄISCHE PATENTSCHRIFT

(11) **EP 3 038 776 B1**
(45) Veröffentlichungstag und Bekanntmachung des Hinweises auf die Patenterteilung: **23.09.2020**
(21) Anmeldenummer: 14757904.9
(22) Anmeldetag: 25.08.2014
(51) Int. Cl.: B23B 51/02

(54) **BOHRER**
DRILL BIT
FORET

(30) Priorität: 30.08.2013 DE 102013014624; 19.12.2013 DE 102013226697
(43) Veröffentlichungstag der Anmeldung: 06.07.2016
(73) Patentinhaber: MAPAL Fabrik für Präzisionswerkzeuge Dr. Kress KG, 73431 Aalen (DE)
(72) Erfinder: KRENZER, Ulrich, 90513 Zirndorf (DE); TOPAL, Serkan, 89281 Altenstadt (DE)
(74) Vertreter: Kordel, Mattias
(86) Internationale Anmeldenummer: PCT/EP2014/068005
(87) Internationale Veröffentlichungsnummer: WO 2015/028431

(56) Entgegenhaltungen:
- DE-A1-102007 037 911
- DE-A1-102009 025 223
- DE-A1-102010 006 797

## Beschreibung

Die Erfindung betrifft einen Bohrer gemäß Oberbegriff des Anspruchs 1.

Bohrer der hier angesprochenen Art sind bekannt. Üblicherweise werden insbesondere Vollhartmetall-Bohrer und Hochleistungsbohrer aus Schnellarbeitsstahl (HSS, das heißt High Speed Steel) mit einem relativ großen Kerndurchmesser von 25 bis 35 % des Bohrerdurchmessers eingesetzt. Bei einem derartig großen Kerndurchmesser ist es erforderlich, die Querschneide des Bohrers, welche dessen Hauptschneiden verbindet, durch eine Ausspitzung zu verkürzen. Diese Maßnahme ist bekannt. Insbesondere bei der Bearbeitung von sehr weichen Werkstoffen, wie zum Beispiel Aluminium, kann es aufgrund der hohen Reibung zwischen den von dem Bohrer abgetragenen Spänen und Spanflächen des Bohrers leicht zu einer Aufbauschneidenbildung im Bereich der Ausspitzung des Bohrers kommen. Diese Aufbauschneiden erhöhen einerseits den Schnittdruck des Bohrers, andererseits verschlechtern sie die Positionsgenauigkeit der Bohrungen, weil der Bohrer mit Aufbauschneiden eine mehr oder weniger undefinierte Schneidengeometrie besitzt und insbesondere beim Anbohrvorgang aus der Rotationsachse abgedrängt wird. Bei zweischneidigen Bohrern kann man die Aufbauschneidenbildung häufig durch eine großzügig bemessene und poliergeschliffene Ausspitzung reduzieren, damit die Späne reibungsarm abgeführt werden können. Bei langspanenden Werkstoffen hat eine allzu großzügige Ausspitzung aber Nachteile bezüglich des Spanbruchs, weil das Zusammenwirken von Hauptschneide, Ausspitzung und die Form der Spannuten die Spanform bestimmen. Da die gesamte Schneidenlänge durch die Länge der Hauptschneide und die Länge der Ausspitzung bestimmt wird, ist die Breite des Spans grundsätzlich größer als die Tiefe der Spannut. Eine sichere Späneabfuhr durch die den Spanraum definierenden Spannuten kann also nur dann gewährleistet sein, wenn die Späne so geformt werden, dass sie aufgrund ihrer Größe problemlos die Spannuten passieren können. Es hat sich auch noch gezeigt, dass eine Spanformung hohe Reibungskräfte und damit auch hohe Temperaturen an der Bohrerspitze bewirkt. Bei der Bearbeitung von Werkstoffen mit hoher Festigkeit sind Kolkverschleiß, also eine Kraterbildung an der Spanfläche, und Schneidenausbrüche häufig die Folge von schlecht abfließenden Spänen.

Aufgabe der Erfindung ist es daher, einen Bohrer zu schaffen, bei dem die Spanabfuhr verbessert ist.

Zur Lösung dieser Aufgabe wird ein Bohrer vorgeschlagen, der die in Anspruch 1 aufgeführten Merkmale aufweist. Es handelt sich also um einen Bohrer mit einer Mittelachse, einer Stirnseite, einer Umfangsfläche, mindestens zwei an der Stirnseite vorgesehenen Hauptschneiden, die bis zur Umfangsfläche reichen und dort in zugehörige Nebenschneiden übergehen, mindestens zwei Zentrumsschneiden, die sich an das der Umfangsfläche abgewandte Ende der Hauptschneiden anschließen, den mindestens zwei Hauptschneiden und den mindestens zwei Zentrumsschneiden zugeordneten Spanflächen, mindestens eine Querschneide, an welche sich die den mindestens zwei Hauptschneiden abgewandten Enden der mindestens zwei Zentrumsschneiden angrenzen, und die durch die Mittelachse verläuft, mit den mindestens zwei Hauptschneiden sowie den mindestens zwei Zentrumsschneiden zugeordneten, in die Umfangsfläche eingebrachten Spanflächen, einer Ausspitzung und mit den Spanflächen zugeordneten Spananlaufschultern. Der erfindungsgemäße Bohrer zeichnet sich dadurch aus, dass die Spananlaufschulter im Bereich der Ausspitzung einen zur Mittelachse gemessenen Axialwinkel γ aufweist, der sich mit zunehmendem Abstand zur Stirnseite kontinuierlich verringert. Der hier genannte Axialwinkel erschließt sich besonders gut in einer Seitenansicht des Bohrers.

Durch diese Ausgestaltung wird sichergestellt, dass bei Einsatz des Bohrers entstehende Späne optimal abgeführt werden, wobei die bei der Spanformung entstehenden Reibungskräfte und damit auch die damit verbundenen Temperaturen deutlich reduziert sind.

Bei einem bevorzugten Ausführungsbeispiel ist vorgesehen, dass die mindestens zwei Zentrumsschneiden - in Draufsicht auf die Stirnseite gesehen - bogenförmig verlaufen und sich dabei in den zugehörigen Spanraum hinein wölben. Die Zentrumsschneiden gehen in die angrenzenden Hauptschneiden über, wobei sie mit den angrenzenden Hauptschneiden im Übergang einen Winkel α im Bereich von 10° ≤ α ≤ 30°, vorzugsweise < 20° einschließen. Diese Ausgestaltung führt dazu, dass im Bereich der Zentrums- und Hauptschneide die Späne derart geformt werden, dass sich keine Belastungsspitzen im Bereich der Schneiden ergeben, die zu einer überproportionalen mechanischen und thermischen Belastung führen würden. Darüber hinaus ergibt sich ein homogenes Spannungsprofil in der Bohrerschneide, diese wird also mit relativ gleichmäßigen Kräften belastet.

Bevorzugt wird ein Ausführungsbeispiel des Bohrers, bei dem die bogenförmig verlaufenden mindestens zwei Zentrumsschneiden über einen geradlinig ausgebildeten Abschnitt in die Querschneide und/oder in die zugehörige Hauptschneide übergehen. Diese Ausgestaltung führt zu einem besonders homogenen Spannungsprofil beziehungsweise zu einer sehr geringen mechanischen und thermischen Belastung der Schneiden.

Bei einem weiteren bevorzugten Ausführungsbeispiel des Bohrers ist vorgesehen, dass die mindestens zwei Zentrumsschneiden im Übergang zur Querschneide unter einem Winkel β von 10° ≤ β ≤ 60°, vorzugsweise von 15° ≤ β ≤ 45°, gegenüber einer gedachten diesen Übergang schneidenden Linie verlaufen, die parallel zu einer Verbindungslinie angeordnet ist, welche den Übergang zwischen der Zentrumsschneide und der angrenzenden Hauptschneide einerseits mit dem der Zentrumsschneide abgewandten Ende der Hauptschneide andererseits verbindet. Auch diese Ausgestaltung führt dazu, dass sich ein homogenes Spannungsprofil in den Schneiden ergibt und mechanische sowie thermische Überbelastungen vermieden werden.

Ein weiteres bevorzugtes Ausführungsbeispiel zeichnet sich dadurch aus, dass auch bei einem derartigen Bohrer die mindestens zwei Zentrumsschneiden - in Draufsicht auf die Stirnseite des Bohrers gesehen - bogenförmig verlaufen, sich in den zugehörigen Spanraum hinein wölben.

Weitere Ausgestaltungen ergeben sich aus den Unteransprüchen.

Die Erfindung wird im Folgenden anhand der Zeichnung näher erläutert. Dabei zeigen:
- Figur 1: eine Draufsicht auf die Stirnseite eines ersten Ausführungsbeispiels eines Bohrers;
- Figur 2: eine perspektivische Ansicht des in Figur 1 dargestellten Bohrers;
- Figur 3: eine Seitenansicht des abgebrochenen vorderen Endes des Bohrers nach Figur 1;
- Figur 4: eine Draufsicht auf die Stirnseite eines zweiten Ausführungsbeispiels eines Bohrers; und
- Figur 5: eine perspektivische Ansicht des abgebrochenen vorderen Endes des Bohrers nach Figur 4.

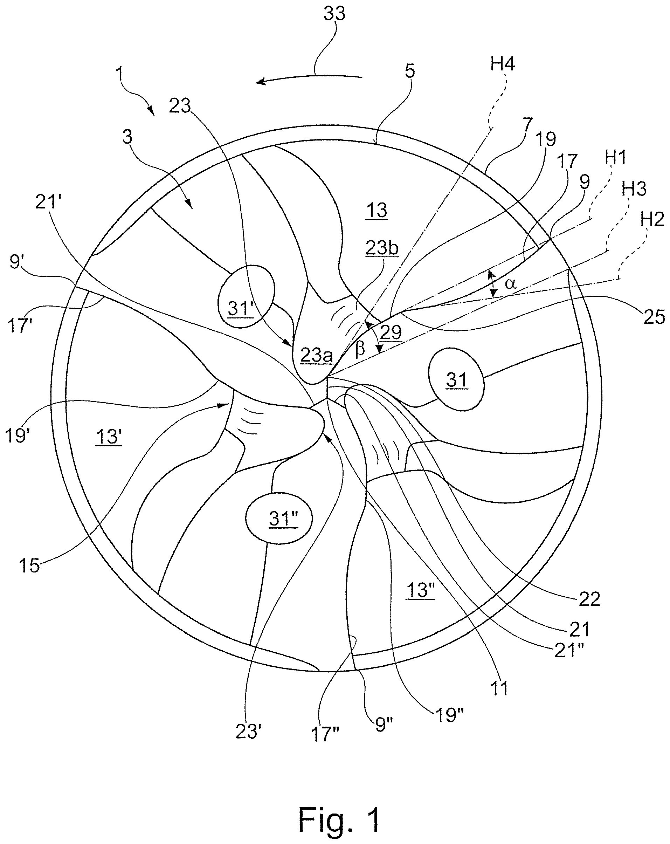

Figur 1 zeigt eine Draufsicht auf ein erstes Ausführungsbeispiel eines Bohrers 1, und zwar auf dessen Stirnseite 3. Der Bohrer weist eine Umfangsfläche 5 auf. In Figur 1 ist durch einen Kreis 7 die Wandung einer zu bearbeitenden Bohrung angedeutet. Der Durchmesser des Kreises 7 entspricht dem Durchmesser einer Bohrung, die mithilfe des hier dargestellten Bohrers 1 herstellbar ist.

Die Umfangsfläche 5 wird überragt von mindestens zwei, hier von drei in Umfangsrichtung in einem Abstand zueinander angeordneten Schneiden 9, 9' und 9". Bei dem hier dargestellten Ausführungsbeispiel handelt es sich also um einen dreischneidigen Bohrer 1.

Bei der Bearbeitung einer Bohrung dreht sich in der Regel der Bohrer 1 um seine Mittelachse 11. Grundsätzlich ist es auch möglich, ein Werkstück gegenüber einem feststehenden Bohrer in Rotation zu versetzen, um eine Bohrung zu realisieren. In die Umfangsfläche 5 des Bohrers 1 sind Spannuten 13, 13' und 13" eingebracht, über die von dem Bohrer 1 von einem Werkstück abgetragene Späne abführbar sind. Bei der Herstellung der Spannuten 13, 13', 13" wird beispielsweise von dem Grundkörper des Bohrers 1 Material abgetragen, sodass ein Kern 15 verbleibt, dessen Durchmesser deutlich geringer ist als der Durchmesser des Bohrers 1. Bei Vollhartmetall-Bohrern oder bei Hochleistungs-HSS-Bohrern wird üblicherweise ein Durchmesser des Kerns 15 gewählt, der etwa 25 bis 35 % des Bohrerdurchmessers ausmacht.

Der Bohrer 1 weist mindestens zwei, hier drei Hauptschneiden 17, 17' und 17" auf, die vorzugsweise identisch ausgebildet sind. Die Hauptschneiden gehen von ihrem von der Mittelachse 11 am weitesten entfernten Ende, in dem die Hauptschneiden 17, 17', 17" in hier kurz als Schneiden 9, 9', 9" bezeichnete Nebenschneiden übergehen, aus und erstrecken sich nach innen in Richtung auf den Kern 15 bis zu zugeordneten mindestens zwei, hier drei Zentrumsschneiden 19, 19', 19", die an ihrem innenliegenden Ende, also an ihrem der Mittelachse 11 nächstliegenden Ende, in mindestens eine, hier in drei Querschneiden übergehen. Dabei ist der Zentrumsschneide 19 die Querschneide 21, der Zentrumsschneide 19' die Querschneide 21' und der Zentrumsschneide 19" die Querschneide 21" zugeordnet. Die drei Querschneiden laufen in der Mittelachse 11 des Bohrers 1 zusammen, welche die Drehachse des Bohrers 1 bildet.

Der Bohrer 1 ist mit einer Ausspitzung versehen. Derartige Ausspitzungen sind bekannt, sodass hier lediglich kurz Folgendes dazu erläutert wird:
In die Stirnseite 3 des Bohrers werden Vertiefungen eingebracht, vorzugsweise durch Schleifen, wobei Material des Grundkörpers des Bohrers 1 abgetragen wird. Die Vertiefungen sind zumindest im Bereich der Zentrumsschneiden 19, 19' und 19" vorgesehen. Sie können sich auch bis zu den Hauptschneiden 17, 17', 17" erstrecken. Alle Vertiefungen sind identisch aufgebaut, sodass hier lediglich auf die Vertiefung 23 eingegangen wird.

Jede zur Realisierung der Ausspitzung in die Stirnseite 3 eingebrachte Vertiefung 23 weist einen ersten Bereich 23a auf, an den sich ein zweiter Bereich 23b anschließt. Dabei ist vorgesehen, dass der erste Bereich 23a ausgehend von der Stirnseite 3 unter einem größeren Winkel gegenüber der Mittelachse 11 geneigt ist, als dies bei dem zweiten Bereich 23b der Vertiefung 23 der Fall ist. Darauf wird unten näher eingegangen. Außerdem ist vorgesehen, dass der erste Bereich 23a vorzugsweise stetig in den zweiten Bereich 23b übergeht, wobei im Übergangsbereich ein gebogener Bereich vorgesehen ist, der konvex ausgebildet ist.

Die Hauptschneide 17 ist bei dem hier dargestellten Ausführungsbeispiel lediglich beispielhaft gekrümmt ausgebildet, und zwar derart, dass sie konkav ist. Demgegenüber ist die Zentrumsschneide 19 bogenförmig ausgebildet, und zwar derart, dass sie sich in den zugehörigen Spanraum hinein wölbt. Wie oben gesagt, erstreckt sich die Zentrumsschneide 19 ausgehend von der Hauptschneide 17 bis zur Querschneide 21. Die hier erläuterte Ausgestaltung gilt für alle drei Schneidbereiche des Bohrers 1, die identisch ausgebildet sind.

In Figur 1 ist eine erste gedachte Linie, die Hilfslinie H1 eingezeichnet, welche den Übergang 25 zwischen der Hauptschneide 17 und der Zentrumsschneide 19 mit dem der Zentrumsschneide 19 abgewandten Ende der Hauptschneide 17 verbindet, in dem die Schneide 9 angeordnet ist. Die erste Hilfslinie H1 bildet die Tangente der Zentrumsschneide 19 im Übergang 25. Eine zweite gedachte Linie, die zweite Hilfslinie H2, bildet die Tangente an der Hauptschneide 17 im Bereich des Übergangs 25 zur Zentrumsschneide 19. Die beiden Hilfslinien H1 und H2 und damit die Zentrums- und Hauptschneide schließen im Übergang 25 einen Winkel α ein, der einen Wert von 0° ≤ α ≤ 30° aufweist, vorzugsweise α < 20° beträgt.

Besonders bevorzugt ist der Bohrer 1 so ausgebildet, dass die durch die Ausspitzung realisierte Zentrumsschneide 19 bogenförmig und insbesondere stetig in die zugehörige Hauptschneide 17 übergeht, wobei dieser stetige Verlauf der Gesamtschneide aus Zentrumsschneide 19 und Hauptschneide 17 für ein homogenes Spannungsprofil in der Bohrerschneide führt, das heißt, dass mechanisch und thermisch überproportional belastete Schneidenbereiche vermieden werden.

Parallel zur ersten Hilfslinie H1 läuft eine weitere gedachte Linie, die Hilfslinie H3, die den Übergang 27 zwischen der Zentrumsschneide 19 und der zugehörigen Querschneide 21 schneidet. Von dem Übergang 27 aus ist hier eine Tangente an dem an den Übergang 27 angrenzenden Bereich der Zentrumsschneide 19 eingezeichnet, die hier als vierte Hilfslinie H4 bezeichnet wird.

Figur 1 ist zu entnehmen, dass die dritte und vierte Hilfslinie H3 und H4, also die Zentrumsschneide 19 mit der Hilfslinie H3 im Übergang 27 einen Winkel β einschließen, der in einem Bereich von 10° bis 60° liegt, vorzugsweise im Bereich von 15° bis 45°.

An die Hauptschneide 17 und die Zentrumsschneide 19 schließen sich zugehörige Spanflächen an, die in die Bildebene von Figur 1 hinein abfallen und bei der Draufsicht auf die Stirnseite 3 des Bohrers 1 verdeckt sind. Bei Verwendung des Bohrers 1 werden von dem Grund einer Bohrung von der Hauptschneide 17, der Zentrumsschneide 19 und der Querschneide 21 Späne abgetragen, wobei die von der Hauptschneide 17 und der Zentrumsschneide 19 abgetragenen Späne auf den verdeckten Spanflächen nach unten in die Bildebene von Figur 1 ablaufen und über den Spanraum 13 abgeführt werden.

Die von der Zentrumsschneide 19 ablaufenden Späne fließen entlang der verdeckten Spanfläche in die Bildebene von Figur 1 hinein und stoßen im weiteren Verlauf auf den ersten Bereich 23a und den zweiten Bereich 23b der Vertiefung 23, welche eine Spanablaufschulter für die von der Zentrumsschneide 19 abgetragenen Späne bildet.

Die Spanfläche der Zentrumsschneide 19 geht über einen konkav gewölbten Bereich in die Spanablaufschulter, also in den ersten und zweiten Bereich 23a, 23b der Vertiefung 23 über. Vorzugsweise ist der konkav ausgebildete Bereich kreisbogenförmig ausgelegt.

Der an die Hauptschneide 17 und die Zentrumsschneide 19 angrenzende Bereich der Stirnseite 3 bildet die Freifläche 29 dieser Schneiden. Diese schließt mit den Spanflächen der Hauptschneide 17 beziehungsweise der Zentrumsschneide 19 einen Spanwinkel ein. Dabei ist bei dem hier dargestellten Ausführungsbeispiel vorgesehen, dass der Spanwinkel zumindest im Bereich der Zentrumsschneide 19 mit zunehmendem Abstand von der Mittelachse 11 nach außen in Richtung auf die Umfangsfläche 5 - vorzugsweise stetig - positiver wird. Dabei ist in dem unmittelbar an die Querschneide 21 anschließenden Bereich der Zentrumsschneide 19 ein negativer Spanwinkel vorgesehen, während in dem weiter außen liegenden Bereich der Zentrumsschneide 19 ein positiver Spanwinkel realisiert wird. Vorzugsweise kann auch für die Hauptschneide 17 vorgesehen werden, dass der Spanwinkel ausgehend vom Übergang 25 bis zur Schneide 9, also von innen nach außen, - vorzugsweise stetig - positiver wird. Die Zentrums- und die Hauptschneide werden damit von innen nach außen gesehen immer schnittfreudiger.

Besonders bevorzugt ist vorgesehen, dass die Zentrumsschneide 19 bogenförmig und insbesondere stetig in die Hauptschneide übergeht, sodass ein homogenes Spannungsprofil in den Schneiden des Bohrers 1 realisiert wird. Zudem werden exponierte Schneidenpunkte vermieden, welche mechanisch und thermisch überproportional bei der Bearbeitung einer Bohrung belastet würden.

In die Stirnseite 3 des Bohrers 1 münden hier Kühl-/Schmiermittelkanäle, von denen hier die zugehörigen Öffnungen 31, 31', 31" zu sehen sind. Über diese Öffnungen wird Kühl-/Schmiermittel ausgetragen, wobei während der Bearbeitung einer Bohrung der Bohrer 1, wie durch einen Pfeil 33 angedeutet, entgegen dem Uhrzeigersinn rotiert. Aus der Öffnung 31 austretendes Kühl-/Schmiermittel erreicht damit die Hauptschneide 17" sowie die zugehörige Zentrumsschneide 19". Entsprechendes gilt für die übrigen Öffnungen.

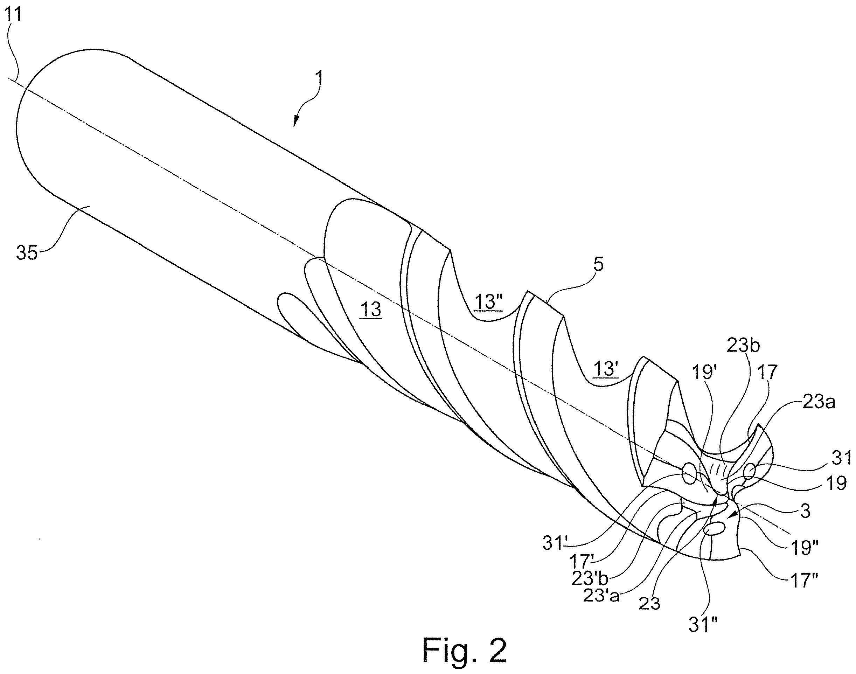

Figur 2 zeigt in perspektivischer Ansicht den in Figur 1 dargestellten Bohrer 1. Gleiche und funktionsgleiche Teile sind mit identischen Bezugsziffern versehen, sodass insofern auf die Beschreibung zu Figur 1 verwiesen wird.

Der Bohrer 1, dessen Stirnseite 3 in Figur 1 wiedergegeben ist, weist an seiner der Stirnseite 3 abgewandten Seite beispielsweise einen Schaft 35 auf, über den der Bohrer 1 mit einer Aufnahme gekoppelt werden kann, sei es einer Bohrmaschine beziehungsweise Werkzeugmaschine im weitesten Sinne, einem Adapter oder dergleichen. Über die Aufnahme wird in den Bohrer in der Regel ein Drehmoment eingeleitet, um diesen in Rotation zu versetzen. In die Umfangsfläche 5 des Bohrers 1 sind mindestens zwei, hier drei Spannuten eingebracht, die den in die Stirnseite 3 des Bohrers 1 eingebrachten Schneiden zugeordnet sind und die Spanräume bilden, in welche die von den Schneiden abgetragenen Späne zum Abtransport gelangen.

In Figur 2 ist der der Hauptschneide 17' und der Zentrumsschneide 19' zugeordnete, durch die Spannut 13' realisierte Spanraum besonders deutlich zu sehen, aber auch die Spanräume, die den Hauptschneiden 17 und 17" sowie den Zentrumsschneiden 19 und 19" zugeordnet sind und die durch die Spannuten 13 und 13" realisiert werden.

Deutlich erkennbar sind die durch die Ausspitzung bewirkten Vertiefungen 23 in der Stirnseite 3 des Bohrers, die einen ersten Bereich 23a und einen zweiten Bereich 23b umfassen. Die Bereiche 23a und 23b bilden die Spananlaufschultern der zugehörigen Schneide, hier der Zentrumsschneide 19.

Entsprechend bilden die Bereiche 23'a und 23'b die Anlaufschultern der Zentrumsschneide 19'. Die von der Zentrumsschneide 19' abgetragenen Späne bei der Bearbeitung eines Werkstücks mittels des hier beschriebenen Bohrers 1 laufen also auf der der Zentrumsschneide 19' zugeordneten, in Figur 2 verdeckten Spanfläche ab und gelangen so zu den Bereichen 23'a und 23'b und werden über diese Bereiche beziehungsweise Anlaufschultern in die Spannut 13' gelenkt.

Alle Schneiden, Vertiefungen und Spanräume sind identisch aufgebaut, sodass Erläuterungen zu einer der Schneiden beziehungsweise Vertiefungen und Spanräume für alle anderen Schneiden, Vertiefungen und Spanräume identisch gilt.

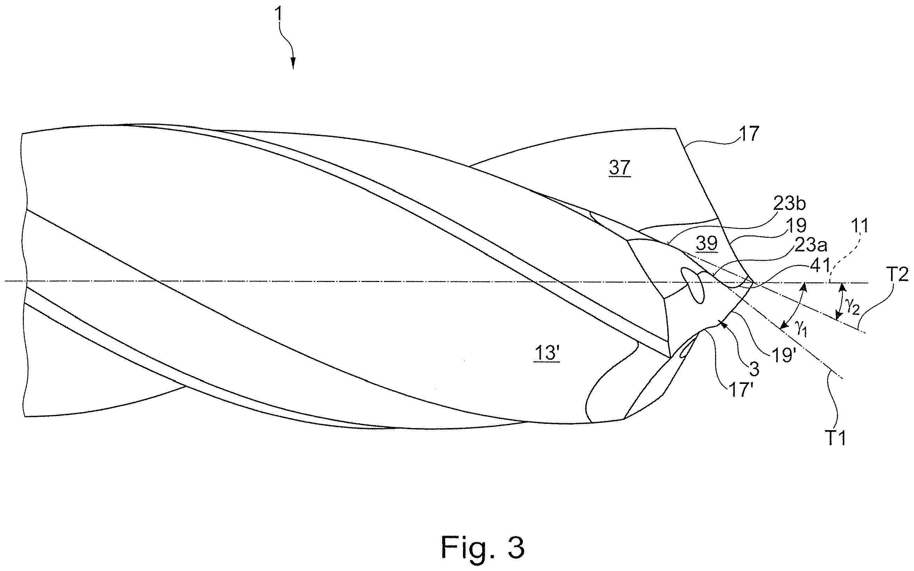

Figur 3 zeigt den Bohrer 1 in Seitenansicht, wobei hier nur dessen abgebrochenes vorderes Ende wiedergegeben ist. Gleiche und funktionsgleiche Teile sind mit identischen Bezugsziffern versehen, sodass insofern auf die vorangegangene Beschreibung verwiesen wird.

Anhand von Figur 3 soll der Verlauf der Ausspitzung näher erläutert werden, die in die Stirnseite 3 des Bohrers 1 eingebracht wird und zu der Vertiefung 23 im Bereich der Zentrumsschneide 19 und zu den übrigen den anderen Schneiden zugeordneten Vertiefungen führt.

Die Vertiefungen ergeben sich aus der Stirnansicht gemäß Figur 1. Es wurde dort ausgeführt, dass die Vertiefung 23 einen ersten Bereich 23a und einen zweiten Bereich 23b aufweist, wobei der erste Bereich 23a näher an der Stirnseite 3 des Bohrers 1 liegt, als der sich anschließende zweite Bereich 23b.

An den ersten Bereich 23a ist in Figur 3 eine erste Tangente T1 angelegt, und an den zweiten Bereich 23b eine zweite Tangente T2.

Die erste Tangente T1 ist in axialer Richtung des Bohrers 1 gegenüber der Mittelachse 11 in axialer Richtung unter einem auch als Axialwinkel bezeichneten Winkel γ1 geneigt, während die zweite Tangente T2 in axialer Richtung des Bohrers 1 gegenüber der Mittelachse 11 unter einem Winkel γ2 geneigt ist.

Aus Figur 3 wird deutlich, dass der Winkel γ1 größer ist als der Winkel γ2. Der Bohrer 1 ist also so ausgebildet, dass der erste Bereich 23a, der die Spananlaufschulter für den zentrumsnahen Bereich der Zentrumsschneide 19 bildet, stärker geneigt ist als der die Spananlaufschulter für den zentrumsferneren Bereich der Zentrumsschneide 19 bildende zweite Bereich 23b. Der Winkel der Spananlaufschulter, die durch die Bereiche 23a und 23b gebildet wird, verringert sich also mit zunehmendem Abstand zur Stirnseite 3. Die nahe der Mittelachse 11 liegende Ausspitzung ist also mit einem relativ großen Axialwinkel γ1 ausgebildet. Mit zunehmendem Abstand von der Stirnseite 3 wird der Winkel γ immer kleiner, sodass im zweiten Bereich 23b der Winkel γ2 gegeben ist. Mit weiterem Abstand zur Stirnseite 3 nähert sich der Axialwinkel der Ausspitzung dem Drallwinkel des Teils der den Spanraum bildenden Spannut 13 an, welcher am Durchmesser des Kerns 15 den zweiten Bereich 23b tangiert. Der hierdurch entstehende Spanraum ist also ausgehend von der Mittelachse 11 des Bohrers 1 heraus besonders strömungsgünstig gestaltet, sodass die von den Schneiden, insbesondere hier den Zentrumsschneiden 19 abgetragenen Späne strömungsgünstig in den Spanraum 13 gelangen, wobei sehr wenig Reibungskräfte vorliegen.

In Figur 3 sind außer der Hauptschneide 17' und der Zentrumsschneide 19' die Hauptschneide 17 und die Zentrumsschneide 19 zu sehen. Bei der hier vorliegenden Seitenansicht sind auch die der Hauptschneide 17 zugeordnete Spanfläche 37 und die der Zentrumsschneide 19 zugeordnete Spanfläche 39 zu sehen. Auf diesen Spanflächen laufen die von der Hauptschneide 17 und der Zentrumsschneide 19 abgetragenen Späne ab und gelangen so in den diesen Schneiden zugeordneten Spanraum 13, wobei die von der Zentrumsschneide 19 abgetragenen Späne von der Spanfläche 39 ablaufen und gegen die durch die Ausspitzung beziehungsweise die Bereiche 23a und 23b gebildeten Spananlaufschultern anlaufen. Figur 3 zeigt auch, dass die Spanfläche 39 der Zentrumsschneide 19 in die die Spanlauf bildenden Bereiche 23a und 23b übergehen, und zwar über einen gewölbten, konkaven Bereich 41, der vorzugsweise kreisbogenförmig ausgebildet ist.

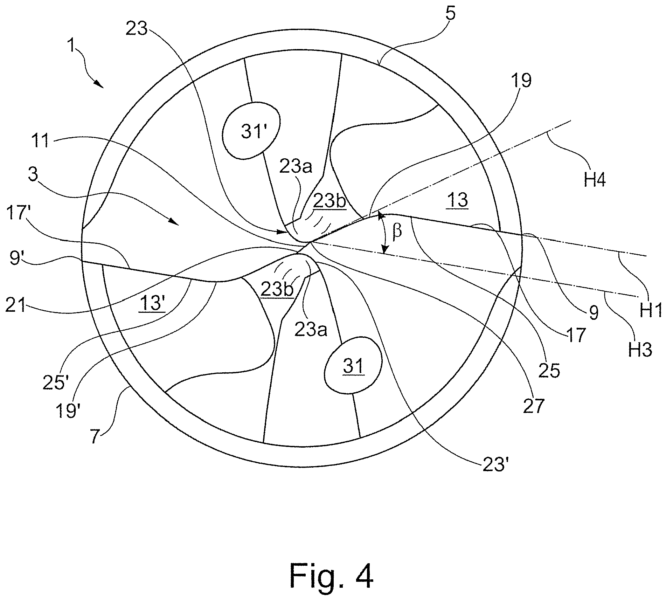

Figur 4 zeigt ein zweites Ausführungsbeispiel eines Bohrers 1, und zwar eine Draufsicht auf dessen Stirnseite 3. Gleiche und funktionsgleiche Teile sind mit identischen Bezugsziffern versehen, sodass insofern auf die vorangegangene Beschreibung verwiesen wird.

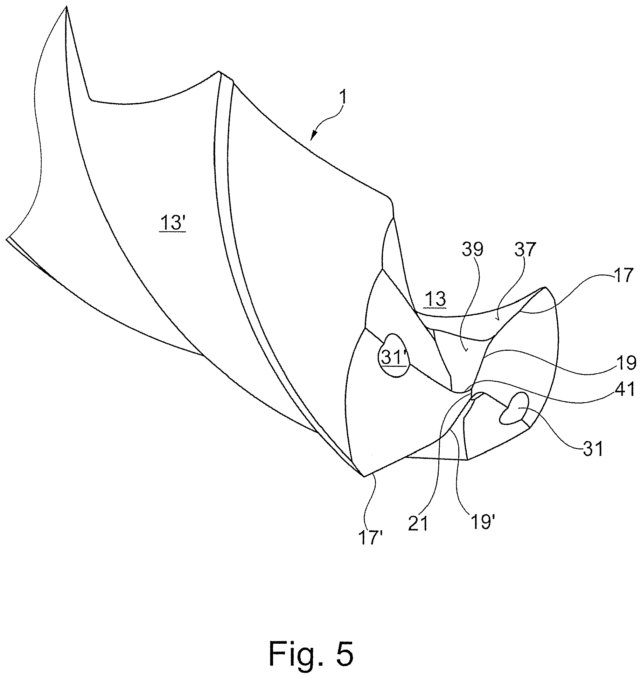

Im Wesentlichen wird hier lediglich auf die Unterschiede zwischen den beiden Ausführungsbeispielen eingegangen:
Das in den Figuren 1 bis 3 dargestellte Ausführungsbeispiel des Bohrers 1 ist als Drei-Schneider ausgelegt. Das in den Figuren 4 und 5 gezeigte Ausführungsbeispiel des Bohrers 1 weist lediglich zwei Schneidbereiche auf. Der in Figur 4 dargestellte Bohrer 1 weist eine Umfangsfläche 5 auf, über welche hier zwei Schneiden 9 und 9' hinausragen. Er weist zwei Hauptschneiden 17 und 17' auf, welche außen von den Schneiden 9, 9' der Nebenschneiden ausgehen und sich bis zu zugehörigen Zentrumsschneiden 19, 19' erstrecken, die durch eine Ausspitzung erzeugt wurden. Dazu wurden, auf bekannte Art und Weise, in die Stirnseite 3 des Bohrers 1 Vertiefungen 23 und 23' eingebracht, die identisch ausgebildet sind und jeweils einen ersten Bereich 23a und zweiten Bereich 23b beziehungsweise 23'a, 23'b aufweisen. Diese vorzugsweise stetig ineinander übergehenden Bereiche bilden die Spananlaufschultern für die von der Zentrumsschneide 19, 19' abgetragenen Späne. Vorzugsweise ist auch hier der Übergang zwischen den Bereichen gebogen, nämlich konvex, ausgebildet.

Die beiden Zentrumsschneiden 19, 19' gehen jeweils über in eine Querschneide 21, welche die Mittelachse 11 des Bohrers 1 schneidet.

In Figur 4 ist mit Bezugsziffer 25 der Übergang zwischen der Hauptschneide 17 und der Zentrumsschneide 19 gekennzeichnet. Da der Bohrer 1 punktsymmetrisch zur Mittelachse 11 ausgebildet ist, wird hier auf die weiteren Schneiden 17' und 19' nicht eingegangen, die ebenfalls einen Übergang 25' aufweisen.

Von dem Übergang 25 aus ist eine den Übergang 25 mit der Schneide 9 verbindende Hilfslinie H1 einzeichnet. Bei dem hier dargestellten Ausführungsbeispiel ist die Hauptschneide 17 geradlinig ausgebildet und nicht gewölbt, wie dies bei dem Ausführungsbeispiel nach Figur 1 der Fall ist. Sie fällt also mit der Hilfslinie H1 zusammen, sodass der anhand von Figur 1 erläuterte Winkel α den Wert 0° aufweist, weil auch die in Figur 1 dargestellte Hilfslinie H2 mit der Hilfslinie H1 zusammenfällt.

Bevorzugt wird, wie dies bei dem ersten Ausführungsbeispiel der Fall ist, auch bei dem hier vorliegenden zweiten Ausführungsbeispiel vorgesehen, dass die Zentrumsschneide 19 bogenförmig und insbesondere stetig in die Hauptschneide übergeht, um das oben angesprochene homogene Spannungsprofil in der Bohrerschneide zu gewährleisten und Bereiche in den Schneiden zu vermeiden, welche mechanisch und thermisch überproportional belastet werden.

Parallel zur ersten Hilfslinie H1 ist eine dritte Hilfslinie H3 in Figur 4 eingezeichnet, welche den Übergang 27 der Zentrumsschneide 19 in die Querschneide 21 schneidet. Eine Tangente an die Zentrumsschneide 19 unmittelbar am Übergang 27 ist als Hilfslinie H4 in Figur 4 eingezeichnet, wie dies auch in Figur 1 der Fall ist. Die beiden Hilfslinien H4 und H3 schließen einen Winkel β ein. Die Zentrumsschneide 19 geht also im Übergangsbereich 27 in die Querschneide 21 unter diesem Winkel β über, der im Bereich von 10° bis 60° gewählt wird, vorzugsweise im Bereich von 15° bis 45°.

Das in Figur 4 dargestellte Ausführungsbeispiel des Bohrers 1 weist ebenfalls Öffnungen 31 und 31' auf, über die Kühl-/Schmiermittel austreten kann.

Die der Hauptschneide 17 und der Zentrumsschneide 19 zugeordneten Spanflächen verlaufen in die Bildebene von Figur 4 hinein, sodass sie hier verdeckt sind.

Die von der Zentrumsschneide 19 auf der zugehörigen Spanfläche ablaufenden Späne laufen gegen die zugehörigen Spananlaufflächen an, die durch die Bereiche 23a und 23b der Vertiefung 23 gebildet werden, also durch die Ausspitzung des Bohrers 1. Vorzugsweise ist auch hier vorgesehen, dass im Übergang zwischen Spanfläche und Spananlaufflächen ein konkav gewölbter Abschnitt vorliegt, der vorzugsweise kreisbogenförmig ausgebildet ist.

Für das in Figur 4 dargestellte Ausführungsbeispiel gilt, wie bei dem Bohrer nach den Figuren 1 bis 3, dass die beiden Bereiche 23a und 23b mit Bezug auf die Mittelachse 11 in axialer Richtung geneigt ausgebildet sind, wobei der Axialwinkel in der Nähe der Stirnseite relativ groß ist und mit zunehmendem Abstand von der Stirnseite 3 abnimmt. Vorzugsweise ist vorgesehen, dass dieser Axialwinkel stetig abnimmt und sich schließlich dem Drallwinkel der Spannut 13 annähert, die den Spanraum realisiert. Es ergeben sich also hier die anhand von Figur 3 gegebenen Verhältnisse, wobei der Axialwinkel in Figur 3 mit γ1 und γ2 bezeichnet ist. Dabei entspricht γ1 dem zur Mittelachse 11 gesehenen Neigungswinkel des ersten Bereichs 23a und γ2 dem Neigungswinkel des zweiten weiter von der Stirnseite 3 entfernt liegenden Bereichs 23b der Vertiefung 23, wobei, wie gesagt, die beiden Bereiche 23a und 23b die Anlaufschulter für von der Zentrumsschneide 19 abgetragene Späne bilden.

Figur 5 zeigt schließlich eine perspektivische Ansicht des abgebrochenen vorderen Endes des zweiten Ausführungsbeispiels des Bohrers 1 nach Figur 4. Gleiche und funktionsgleiche Teile sind mit identischen Bezugsziffern versehen, sodass insofern auf die vorangegangene Beschreibung verwiesen wird.

Bei der Darstellung nach Figur 5 ist der Bohrer 1 so gedreht, dass die der Hauptschneide 17 und der Zentrumsschneide 19 zugeordneten Spanflächen 37 und 39 gut zu erkennen sind. Hier wird auch der konkav gewölbte Bereich 41 sichtbar, über den die Spanfläche 39 der Zentrumsschneide 19 in die zugehörigen Spananlaufschultern, also in die Bereiche 23a und 23b übergeht. Der Bereich 41 ist vorzugsweise kreisbogenförmig ausgebildet.

Es sei hier noch mal darauf verwiesen, dass bei dem zweiten Ausführungsbeispiel des Bohrers 1 die beiden Schneidbereiche identisch ausgebildet sind, sodass das zu den ersten Schneiden (Hauptschneide 17, Zentrumsschneide 19) Gesagte auch für die zweiten Schneiden (Hauptschneide 17', Zentrumsschneide 19') gilt. Entsprechend ist zu dem als Dreischneider ausgebildeten Bohrer 1 nach den Figuren 1 bis 3 zu sagen, dass auch hier die Schneidbereiche identisch ausgebildet sind, ebenso die zugehörigen Ausspitzungen, Spananlaufflächen, Spanflächen sowie Spanräume.

Im Übrigen sei hier noch ausdrücklich darauf hingewiesen, dass der hier beschriebene Bohrer sich durch die besondere Ausgestaltung der Ausspitzung auszeichnet, die zum einen eine Vertiefung 23 mit zwei Bereichen 23a und 23b aufweist, die - in axialer Richtung des Bohrers gesehen - unterschiedlich geneigt sind. Der Winkel dieser Bereiche verringert sich mit zunehmendem Abstand zur Stirnseite 3, wie oben im Einzelnen ausgeführt.

Die Ausspitzung ist zum anderen so ausgebildet, dass die mindestens Zentrumsschneide 19 des Bohrers 1 gewölbt, also konvex, ausgebildet ist und vorzugsweise unter einem Bogen gleichmäßig, insbesondere stetig, in die Hauptschneide 17 übergeht. Dabei kann die Hauptschneide 17, wie anhand des ersten Ausführungsbeispiels beschrieben wurde, konkav ausgebildet sein, oder aber, wie anhand des zweiten Ausführungsbeispiels erläutert wurde, geradlinig. Insbesondere bei einem zweischneidigen Bohrer wird eine geradlinige Hauptschneide 17 bevorzugt.

Die beiden hier beschriebenen Merkmale der speziellen Ausspitzung können unabhängig voneinander an einem Bohrer 1 realisiert werden. Es ist aber auch möglich, diese beiden auf der Ausspitzung beruhenden Ausgestaltungen miteinander zu kombinieren.

Beiden Ausführungsbeispielen der Bohrer ist im Übrigen gemeinsam, dass die konvex gewölbte, bogenförmige Zentrumsschneide 19 in ihren Endbereichen, in denen sie zum einen in die Hauptschneide 17 und zum anderen in die Querschneide 21 übergeht, geradlinig ausgebildete Abschnitte aufweisen kann. Diese Ausgestaltung trägt dazu bei, dass besonders mechanisch und/oder thermisch belastete Schneidenbereiche sicher vermieden werden.

Wesentlich ist, dass bei beiden Ausführungsbeispielen des Bohrers die Ausspitzung, also die Vertiefung 23 und deren Spananlaufflächen bildenden Bereiche 23a und 23b, so ausgebildet sind, dass bei der Bearbeitung eines Bohrung mittels des hier beschriebenen Bohrers die Späne optimal in die die Spanräume bildenden Spannuten 13, 13' und 13" geleitet werden, wobei insbesondere aus den der Mittelachse 11 zugewandten Bereichen die Späne besonders gut abgeführt werden. Es hat sich herausgestellt, dass hierbei die Reibungsarbeit minimiert wird, ohne dass Einbußen bei der Spanformung in Kauf zu nehmen sind.

Wichtig ist auch, dass die Tiefe der Ausspitzung so gering gehalten wird, dass auch Bohrer mit mehr als zwei Schneiden realisierbar sind, wie dies bei dem ersten Ausführungsbeispiel vorgesehen ist. Die Erhöhung der Schneidenzahl, hier also auf drei Schneiden, erlaubt höhere Vorschübe je Umdrehung und führt zu wesentlich verbesserten Bohrungsqualitäten. Dabei werden die Positionsgenauigkeit erhöht und die Gradbildung sowohl am Bohrungseintritt als auch am Bohrungsaustritt wesentlich reduziert. Es zeigt sich auch, dass Werkezuge mit höherer Schneidenzahl zweischneidigen Bohrern bei Schnittunterbrechungen weit überlegen sind.

## Patentansprüche

1. Bohrer mit
- einer Mittelachse (11),
- einer Stirnseite (3),
- einer Umfangsfläche (5),
- mindestens zwei an der Stirnseite (3) vorgesehenen Hauptschneiden (17, 17', 17"), die
- bis zur Umfangsfläche (5) reichen und dort in zugehörige Nebenschneiden (9, 9', 9") übergehen,
- mindestens zwei Zentrumsschneiden (19, 19', 19"), die sich an das der Umfangsfläche (5) abgewandte Ende der Hauptschneide (17, 17', 17") anschließen,
- den mindestens zwei Hauptschneiden (17, 17', 17") und den mindestens zwei Zentrumsschneiden (19, 19', 19") zugeordneten Spanflächen (37, 39),
- den mindestens zwei Hauptschneiden (17, 17', 17") sowie den mindestens zwei Zentrumsschneiden (19, 19', 19") zugeordneten, in die Umfangsfläche (5) eingebrachten Spannuten (13, 13', 13"),
- mindestens einer Querschneide (21, 21', 21"), an welche die den mindestens zwei Hauptschneiden (17, 17', 17") abgewandten Enden der mindestens zwei Zentrumsschneiden (19, 19', 19") angrenzen, und die durch die Mittelachse (11) verläuft,
- einer Ausspitzung und mit
- zumindest den Spanflächen (39) der mindestens zwei Zentrumsschneiden (19, 19', 19") zugeordneten Spananlaufschultern (23),
**dadurch gekennzeichnet, dass**
- der Winkel γ der Spananlaufschulter (23) im Bereich der Ausspitzung zur Mittelachse (11) sich mit zunehmendem Abstand zur Stirnseite (3) kontinuierlich verringert.

2. Bohrer nach Anspruch 1, **dadurch gekennzeichnet, dass** die Spananlaufschulter (23) zwei Bereiche (23a, 23b) aufweist, die bogenförmig ineinander übergehen.

3. Bohrer nach Anspruch 1 oder 2, **dadurch gekennzeichnet, dass**
- die mindestens zwei Zentrumsschneiden (19, 19', 19") - in Draufsicht auf die Stirnseite (3) gesehen - bogenförmig verlaufen, sich in den zugehörigen Spanraum (13, 13', 13") hinein wölben und
- unter einem Winkel α in die angrenzenden Hauptschneiden (17, 17', 17") übergehen, wobei
- die mindestens zwei Zentrumsschneiden (19, 19', 19") mit den angrenzenden Hauptschneiden (17, 17', 17") in dem Übergang (25) einen Winkel α im Bereich von 10° ≤ α ≤ 30°, vorzugsweise von α < 20° einschließen.

4. Bohrer nach Anspruch 3, **dadurch gekennzeichnet, dass** die mindestens zwei Zentrumsschneiden (19, 19', 19") über einen geradlinig ausgebildeten Abschnitt in die Querschneide (21, 21', 21") und/oder in die zugehörige Hauptschneide (17, 17', 17") übergehen.

5. Bohrer nach Anspruch 3 oder 4, **dadurch gekennzeichnet, dass** die mindestens zwei Zentrumsschneiden (19, 19', 19") im Übergang (27) zur mindestens einen Querschneide (21, 21', 21") unter einem Winkel β von 10° bis 60°, vorzugsweise von 15° bis 45°, gegenüber einer gedachten Linie (H3) verlaufen, die parallel zu einer Verbindungslinie (H1) angeordnet ist, welche den Übergang (25) zwischen Zentrumsschneide (19, 19', 19") und angrenzender Hauptschneide (17, 17', 17") mit dem der Zentrumsschneide (19, 19', 19") abgewandten Ende der Hauptschneide (17, 17', 17") verbindet, wobei die gedachte Linie (H3) durch den Übergang (27) zwischen Querschneide (21, 21', 21") und Zentrumsschneide (19, 19', 19") verläuft.

6. Bohrer nach Anspruch 1, **dadurch gekennzeichnet, dass** die Spanflächen (39) der mindestens zwei Zentrumsschneiden (19, 19', 19") in die Spananlaufschultern übergehen.

7. Bohrer nach Anspruch 6, **dadurch gekennzeichnet, dass** der Übergang zwischen Spanflächen und Spananlaufschultern konkav, vorzugsweise kreisbogenförmig ausgebildet ist.

8. Bohrer nach einem der vorhergehenden Ansprüche, **dadurch gekennzeichnet, dass** der Spanwinkel zumindest im Bereich der mindestens zwei Zentrumsschneiden (19, 19', 19") mit zunehmendem Abstand zur Mittelachse (11) nach außen in Richtung auf die Umfangsfläche (5) gesehen - vorzugsweise stetig - positiver wird.

9. Bohrer nach Anspruch 1, **dadurch gekennzeichnet, dass** der Bohrer (1) zwei oder drei Zentrumsschneiden (19, 19', 19") mit daran angrenzenden Hauptschneiden (17, 17', 17") aufweist.

10. Bohrer nach Anspruch 9, **dadurch gekennzeichnet, dass** bei einem Bohrer mit drei Zentrumsschneiden für den Winkel α der Bereich 0° ≤ α ≤ 30°, vorzugsweise α < 20° gilt.

11. Bohrer nach Anspruch 9, **dadurch gekennzeichnet, dass** bei einem Bohrer mit zwei Zentrumsschneiden der Winkel α 0° beträgt.

## Claims

1. A drill having
- a central axis (11),
- a front side (3),
- a circumferential surface (5),
- at least two main edges (17, 17', 17") provided on the front side (3), which
- reach up to the circumferential surface (5) and merge there with associated secondary edges (9, 9',9"),
- at least two central edges (19, 19', 19") that follow on from the end of the main edge (17, 17', 17") that faces away from the circumferential surface (5),
- cutting surfaces (37, 39) associated with the at least two main edges (17, 17', 17") and the at least two central edges (19, 19', 19"),
- chip flutes (13, 13', 13") associated with the at least two main edges (17, 17', 17") as well as the at least two central edges (19, 19', 19") and introduced into the circumferential surface (5),
- at least one cross edge (21, 21', 21") that adjoins the ends of the at least two central edges (19, 19', 19") that face away from the at least two main edges (17, 17', 17") and that passes through the central axis (11),
- a point thinning, and having
- chip run-up shoulders (23) associated with at least the cutting surfaces (39) of the at least two central edges (19, 19', 19"),
**characterised in that**
- the angle y of the chip run-up shoulder (23) in the region of the point thinning towards the central axis (11) continuously decreases as the distance from the front side (3) increases.

2. Drill according to claim 1, **characterised in that** the chip run-up shoulder (23) has two regions (23a, 23b) that merge with each other in an arc-shaped manner.

3. Drill according to any one of claims 1 to 2, **characterised in that**
- the at least two central edges (19, 19', 19") extend, if viewed in a top view onto the front side (3), in an arc-shaped manner and are curved into the associated chip space (13, 13', 13"), and
- merge with the adjoining main edges (17, 17', 17") under an angle a, wherein
- the at least two central edges (19, 19', 19") enclose an angle α with the adjoining main edges (17, 17', 17") in the junction (25) that falls into a range of 10° ≤ α ≤ 30°, preferably of α < 20°.

4. Drill according to claim 3, **characterised in that** the at least two central edges (19, 19', 19") merge with the cross edge (21, 21', 21") and/or with the associated main edge (17, 17', 17") via a rectilinear section.

5. Drill according to claim 3 or 4, **characterised in that** the at least two central edges (19, 19', 19") extend in the junction (27) to the at least one cross edge (21, 21', 21") at an angle β of 10° to 60°, preferably of 15° to 45°, relative to an imaginary line (H3) that runs parallel to a connection line (H1) that connects the junction (25) between the central edge (19, 19', 19") and the adjoining main edge (17, 17', 17") with the end of the main edge (17, 17', 17") that faces away from the central edge (19, 19', 19"), wherein the imaginary line (H3) extends through the junction (27) between the cross edge (21, 21', 21") and the central edge (19, 19', 19").

6. Drill according to claim 1, **characterised in that** the cutting surfaces (39) of the at least two central edges (19, 19', 19") merge with the chip run-up shoulders.

7. Drill according to claim 6, **characterised in that** the junction between the cutting surfaces and the chip run-up shoulders is formed to be concave, preferably in the shape of a circular arc.

8. Drill according to any one of the preceding claims, **characterised in that** the cutting angle becomes, preferably continuously, increasingly positive at least in the region of the at least two central edges (19, 19', 19") as the distance from the central axis (11) outwards in the direction of the circumferential surface (5) increases.

9. Drill according to claim 1, **characterised in that** the drill (1) has two or three central edges (19, 19', 19") with adjoining main edges (17, 17', 17").

10. Drill according to claim 9, **characterised in that** in a drill with three central edges, the range 0° ≤ α ≤ 30°, preferably α < 20°, applies to the angle a.

11. Drill according to claim 9, **characterised in that** in a drill with two central edges, the angle α is 0°.

## Revendications

1. Foret avec
- un axe central (11),
- une face frontale (3),
- une face circonférentielle (5),
- au moins deux tranchants principaux (17, 17', 17") prévus sur la face frontale (3), lesquels
- s'étendent jusqu'à la face circonférentielle (5) et passent dans des tranchants secondaires (9, 9', 9") correspondants là,
- au moins deux tranchants centraux (19, 19', 19") qui rejoignent l'extrémité du tranchant principal (17, 17', 17") opposée à la face circonférentielle (5),
- des faces de coupe (37, 39) affectées au moins aux deux tranchants principaux (17, 17', 17") et au moins aux deux tranchants centraux (19, 19', 19"),
- des rainures de coupe (13, 13', 13") affectées au moins aux deux tranchants principaux (17, 17', 17") et au moins aux deux tranchants centraux (19, 19', 19"), réalisées dans la face circonférentielle (5),
- au moins un tranchant transversal (21, 21', 21") sur lequel jouxtent les extrémités des au moins deux tranchants centraux (19, 19', 19") opposées au moins les deux tranchants principaux (17, 17', 17"), et qui passe par l'axe central (11),
- un amincissement et avec
- des épaulements de démarrage de coupe (23) affectés au moins aux faces de coupe (39) des au moins deux tranchants centraux (19, 19', 19"),
**caractérisé en ce que**
- l'angle γ de l'épaulement de démarrage de coupe (23) dans la zone de l'amincissement par rapport à l'axe central (11) diminue en continu avec une augmentation de l'espacement par rapport à la face frontale (3).

2. Foret selon la revendication 1, **caractérisé en ce que** l'épaulement de démarrage de coupe (23) présente deux zones (23a, 23b) qui se confondent en forme d'arc.

3. Foret selon la revendication 1 ou 2, **caractérisé en ce que**
- les au moins deux tranchants centraux (19, 19', 19"), vus de devant sur la face frontale (3), sont en forme d'arc, se voûtent dans l'espace de coupe (13, 13', 13") correspondant et
- passent dans les tranchants principaux (17, 17', 17") adjacents sous un angle a,
- les au moins deux tranchants centraux (19, 19', 19") forment un angle α compris entre 10° ≤ α ≤ 30°, de préférence α < 20°, avec les tranchants principaux (17, 17', 17") adjacents dans la transition (25).

4. Foret selon la revendication 3, **caractérisé en ce que** les au moins deux tranchants centraux (19, 19', 19") passent par une section de forme linéaire dans le tranchant transversal (21, 21', 21") et/ou dans le tranchant principal (17, 17', 17") correspondant.

5. Foret selon la revendication 3 ou 4, **caractérisé en ce que**, dans la transition (27) vers au moins un tranchant transversal (21, 21', 21"), les au moins deux tranchants centraux (19, 19', 19") s'étendent sous un angle β de 10° à 60°, préférablement de 15° à 45°, par rapport à une ligne imaginaire (H3) qui est disposée parallèlement à une ligne de jonction (H1) qui relie la transition (25) entre le tranchant central (19, 19', 19") et le tranchant principal (17, 17', 17") adjacent à l'extrémité du tranchant principal (17, 17', 17") opposée au tranchant central (19, 19', 19"), la ligne imaginaire (H3) passant par la transition (27) entre le tranchant transversal (21, 21', 21") et le tranchant central (19, 19', 19").

6. Foret selon la revendication 1, **caractérisé en ce que** les faces de coupe (39) des au moins deux tranchants centraux (19, 19', 19") passent dans les épaulements de démarrage de coupe.

7. Foret selon la revendication 6, **caractérisé en ce que** la transition entre les faces de coupe et les épaulements de démarrage de coupe est de forme concave, préférablement en arc de cercle.

8. Foret selon l'une des revendications précédentes, **caractérisé en ce que**, au moins dans la zone des au moins deux tranchants centraux (19, 19', 19"), l'angle de coupe devient plus positif, préférablement de façon constante, lorsque la distance par rapport à l'axe central (11) augmente vu vers l'extérieur en direction de la face circonférentielle (5).

9. Foret selon la revendication 1, **caractérisé en ce que** le foret (1) présente deux ou trois tranchants centraux (19, 19', 19") avec des tranchants principaux (17, 17', 17") adjacents.

10. Foret selon la revendication 9, **caractérisé en ce que**, pour un foret avec trois tranchants centraux, la zone 0° ≤ α ≤ 30°, préférablement α < 20°, est valable pour l'angle α.

11. Foret selon la revendication 9, **caractérisé en ce que**, pour un foret avec deux tranchants centraux, l'angle α est de 0°.
